# EUROPEAN PATENT APPLICATION

(11) **EP 4 570 711 A2**
(43) Date of publication of application: **18.06.2025**
(21) Application number: 24203617.6
(22) Date of filing: 30.09.2024
(51) Int. Cl.: B65G 11/16, B65G 45/02

(54) **CONVEYANCE APPARATUS**

(30) Priority: 19.10.2023 JP 2023180331
(71) Applicant: Ishida Co., Ltd., Kyoto-shi Kyoto 606-8392 (JP)
(72) Inventor: MIYAMOTO, Hideshi, Ritto-shi, Shiga, 520-3026 (JP)
(74) Representative: Gill Jennings & Every LLP

(57) **Abstract**

A conveyance apparatus (1) according to an embodiment includes: a conveyance unit (3) configured to convey an article that is charged from an outside and contains fat on at least a surface of the article, wherein a hydrophilic coating layer is formed on a conveyance front surface (31) of the conveyance unit (3).

## Description

### Technical Field

The present invention relates to a conveyance apparatus.

### Background Art

In the related art, a known combination weighing apparatus includes a trough and a chute, both of which utilize shutter processing as a technique of antisticking.

### Citation List

### Patent Literature

Patent Literature 1: WO 2014/067533 A1
Patent Literature 2: JP 2020-2336 A1

### Summary of the Invention

However, such a combination weighing apparatus has a problem that when an article containing a large amount of fat such as chicken thigh or beef (slice) is conveyed, the fat adheres to a conveyance surface of a conveyance unit that conveys an article, such as a trough or a chute, and conveyance performance is deteriorated as a production time elapses.

The present invention has been made in view of the above problem, and an object of the present invention is to provide a conveyance apparatus that can reduce deterioration in conveyance performance even when an article containing fat on the surface thereof is conveyed.

A conveyance apparatus according to an embodiment includes: a conveyance unit configured to convey an article that is charged from an outside and contains fat on at least a surface of the article, wherein a hydrophilic coating layer is formed on a conveyance front surface of the conveyance unit.

According to the present invention, it is possible to provide a conveyance apparatus that can reduce deterioration in conveyance performance even when an article containing fat on the surface thereof is conveyed.

### Brief Description of the Drawings

FIG. 1 is a diagram for describing an example of an overall configuration of a conveyance apparatus according to a first embodiment;
FIG. 2 is a diagram for describing an example of a coating layer formed on a conveyance front surface of a conveyance unit of the conveyance apparatus according to the first embodiment;
FIG. 3 is a diagram illustrating a part of a conveyance front surface of a trough of the conveyance apparatus according to the first embodiment;
FIG. 4 is a diagram illustrating a part of a conveyance front surface of a chute of the conveyance apparatus according to the first embodiment;
FIG. 5 is a diagram illustrating a part of the conveyance front surface of the chute/trough of the conveyance apparatus according to the first embodiment;
FIG. 6 is a sectional view taken along line X-X in FIG. 5;
FIG. 7 is an example of a side view of the trough of the conveyance apparatus according to the first embodiment; and
FIG. 8 is an example of a side view of the chute of the conveyance apparatus according to the first embodiment.

### Description of Embodiments

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

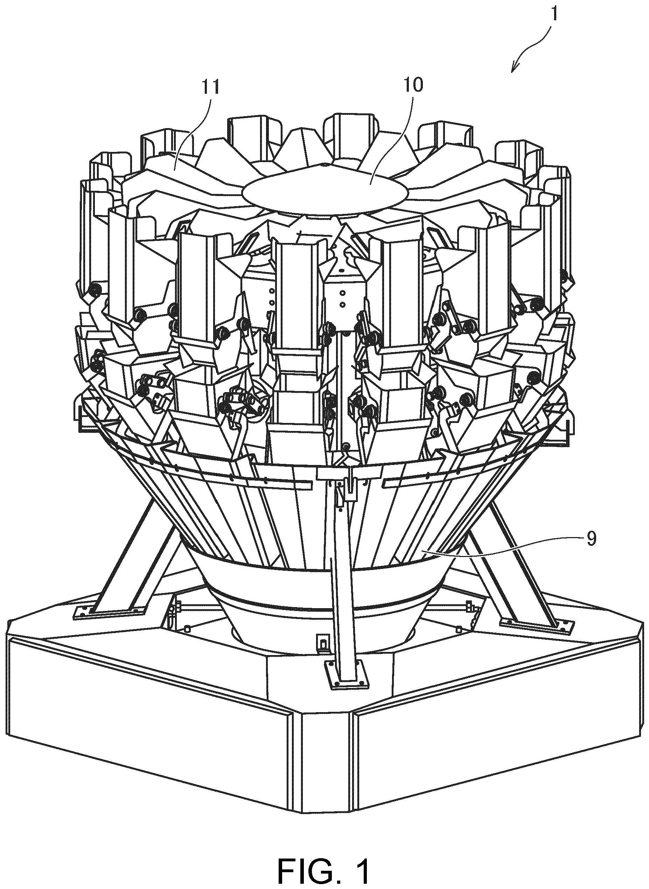

Hereinafter, a conveyance apparatus 1 according to a first embodiment of the present invention will be described with reference to FIGS. 1 to 8. In the present embodiment, a combination weighing apparatus will be described as an example of the conveyance apparatus 1, but the present invention is not limited thereto. Note that the combination weighing apparatus is an apparatus that calculates an article supplied from a conveyor disposed upstream so that an article has a target weight value, and supplies the calculated article to a downstream apparatus.

As illustrated in FIG. 1, the conveyance apparatus 1 according to the present embodiment includes a dispersion table 10, a plurality of troughs (conveyance feeders) 11, a pool hopper 12, a weighing hopper 13, and a chute 9. Note that the conveyance apparatus 1 may be a timing hopper that temporarily receives the article discharged from the chute 9 and then discharges the article downstream.

The dispersion table 10 receives an article charged from the outside and discharges the article in the circumferential direction. Specifically, the dispersion table 10 may include a vibrator, and may convey the article in the circumferential direction on the basis of the vibration component applied by the vibrator. In the above-described example, the configuration in which the dispersion table 10 conveys the article by vibration has been described. However, for example, the dispersion table 10 may include a substantially conical member, and may rotate around an apex as a rotation center.

Each of the plurality of troughs 11 receives the article discharged from the dispersion table 10 and conveys the article further downstream. Specifically, the trough 11 may include a vibrator, and may convey the article further downstream on the basis of the vibration component applied by the vibrator.

The pool hopper 12 opens and closes the gate to temporarily retain the article discharged from the trough 11 and then to discharge the article to the weighing hopper 13 disposed downstream.

The weighing hopper 13 opens and closes the gate to temporarily retain the article discharged from the pool hopper 12 and to acquire a weight value of the retained article. Thereafter, when the retained article is selected as a result of combination calculation by a control unit (not illustrated), the weighing hopper 13 discharges the retained article to the downstream chute 9.

The chute 9 collects the articles discharged from the weighing hopper 13 at one place and discharges the articles downward. In the present embodiment, the configuration in which the article is discharged from the weighing hopper 13 has been described. However, the present invention is not limited to this configuration. When a booster hopper is disposed, an article discharged from the booster hopper may be received.

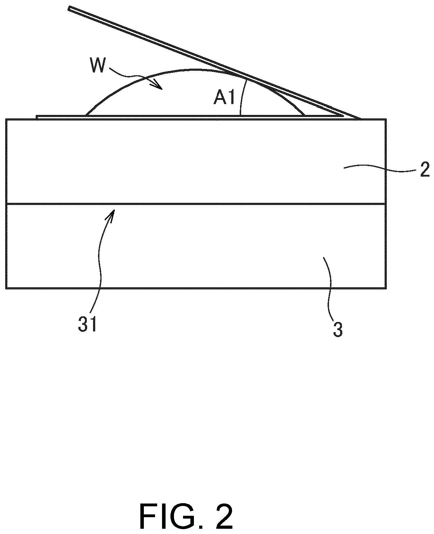

As illustrated in FIG. 2, a hydrophilic coating layer 2 is formed on a conveyance front surface 31 of a conveyance unit 3 of the conveyance apparatus 1. Here, in the present embodiment, the conveyance unit 3 includes the dispersion table 10, the plurality of troughs 11, the pool hopper 12, the weighing hopper 13, the booster hopper, and the chute 9. That is, the hydrophilic coating layer 2 is formed on the conveyance front surface of the plurality of troughs 11 and the conveyance front surface of the chute 9.

Further, the hydrophilic coating layer 2 is formed on the surfaces of the pool hopper 12 and the weighing hopper 13, which are to come into contact with the article. Here, the surfaces that are to come into contact with the article includes surfaces that are to come into contact with the article in a cylindrical member and a gate. The cylindrical member and the gate constitute the hopper. The cylindrical member has an open top and bottom. The gate closes an opening located below the cylindrical member.

The type of the hydrophilic coating layer 2 is roughly classified into an inorganic type and an organic type. The inorganic coating layer is formed by using a photocatalyst represented by titanium oxide. Specifically, the inorganic coating layer is formed by forming a highly hydrophilic hydroxyl group on the surface of titanium oxide by sunlight (mainly ultraviolet rays). The organic coating layer is formed by using a resin containing an ion or a hydrophobic group.

For example, as illustrated in FIG. 2, a contact angle A1 between the conveyance front surface 31 on which the hydrophilic coating layer 2 is formed and a water droplet W formed on the conveyance front surface 31 is 40 degrees or less. The result of an experiment reveals that, according to such a configuration, the affinity between the above-described conveyance front surface 31 and water molecules is increased and hydrophilicity is developed. The result similarly reveals that hydrophobicity is developed when the contact angle A1 is from 40 degrees to 90 degrees, and water repellency is exhibited when the contact angle A1 is 90 degrees or more.

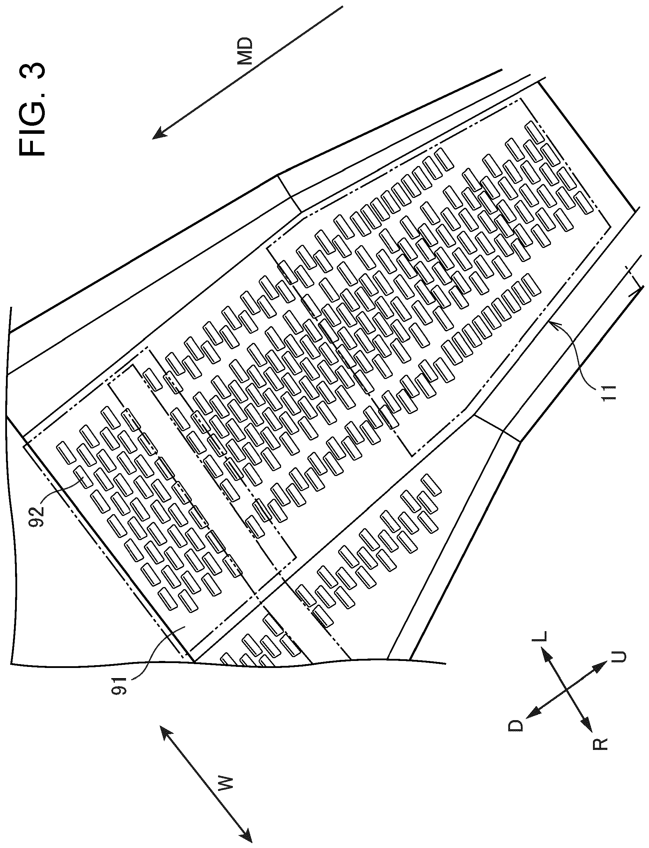

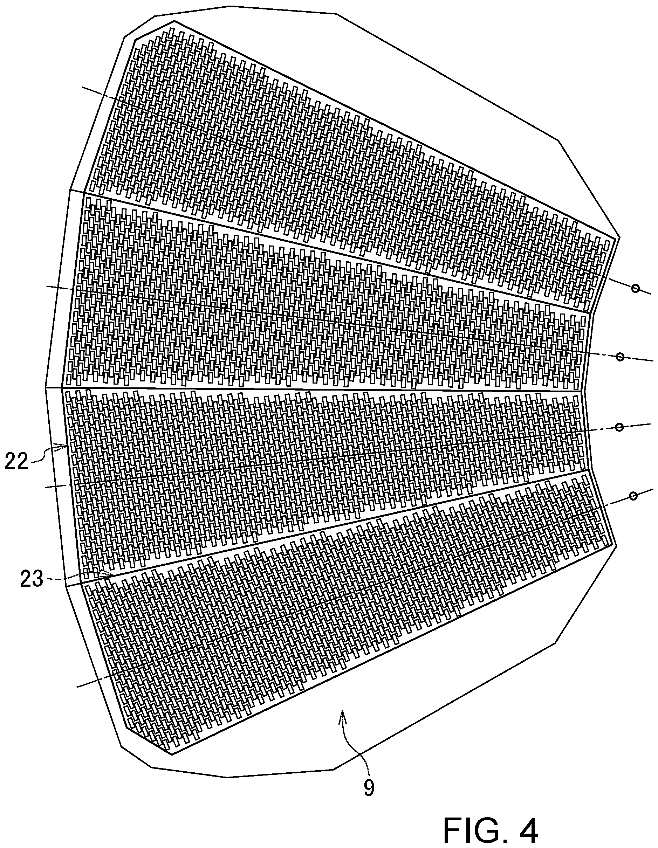

A plurality of protrusions may be provided on the conveyance front surface 31 described above. For example, as illustrated in FIG. 3, a plurality of protrusions 92 may be provided on a conveyance front surface 91 of the trough 11. As illustrated in FIG. 4, a plurality of protrusions 22 may be provided on a conveyance front surface 23 of the chute 9.

Here, the plurality of protrusions 22/92 may be formed by embossing.

Alternatively, the plurality of protrusions 22/92 may be formed by shutter processing. The shutter processing may be louver processing. The conveyance front surface 23/91 subjected to the shutter processing has a structure in which when the conveyance front surface 23/91 is viewed from the front, a space on the other side of the chute 9/trough 11 is not visible, and can be visible by shifting the viewpoint.

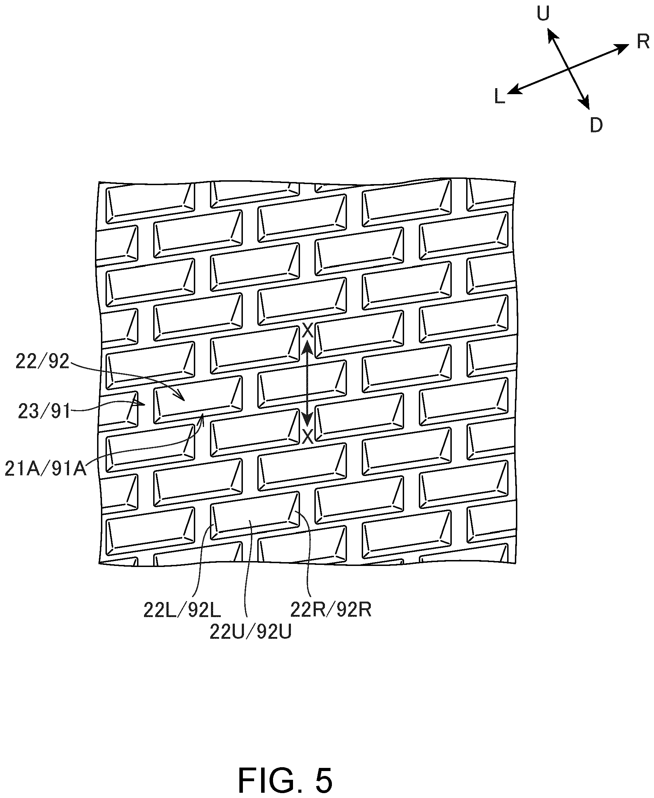

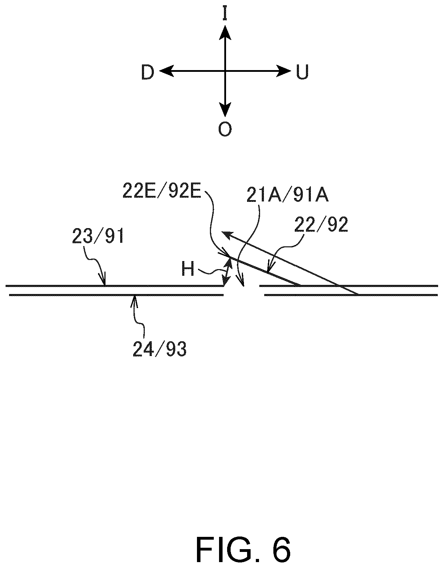

As illustrated in FIGS. 5 and 6, an opening 21A/91A directed from the conveyance front surface 23/91 to a back surface 24/93 is formed at a downstream end 22E/92E of each of the plurality of protrusions 22/92. Here, the back surface 24 is the back surface of the chute 9, and the back surface 93 is the back surface of the trough 11. The opening 21A is formed from the conveyance front surface 23 of the chute 9 toward the back surface 24, and the opening 91A is formed from the conveyance front surface 91 of the trough 11 toward the back surface 93.

In other words, as illustrated in FIGS. 5 and 6, the trough 11 includes a first sliding surface 91 and a second sliding surface 92. The first sliding surface 91 includes a plurality of the openings 91A. The second sliding surface 92 closes a part of the openings 91A and is disposed at a position on an inner side I of the trough 11 with respect to the first sliding surface 91.

The second sliding surface 92 is formed continuously with the first sliding surface 91 on an upstream side U, a left side L, and a right side R of the above-described opening 91A.

Specifically, as illustrated in FIG. 5, the second sliding surface 92 includes a left-side plane 92L, a right-side plane 92R, and an upper-side plane 92U.

Here, as illustrated in FIG. 5, the left-side plane 92L is formed so as to rise from the first sliding surface 91 toward the inner side I on the left side L of the opening 91A.

As illustrated in FIG. 5, the right-side plane 92R is formed so as to rise from the first sliding surface 91 toward the inner side I on the right side R of the opening 91A.

Further, as illustrated in FIG. 5, the upper-side plane 92U is formed so as to connect the left-side plane 92L and the right-side plane 92R.

Similarly, as illustrated in FIGS. 5 and 6, the chute 9 includes a first sliding surface 23 and a second sliding surface 22. The first sliding surface 23 includes a plurality of the openings 21A. The second sliding surface 22 closes a part of the openings 21A and is disposed at a position on the inner side I of the chute 9 with respect to the first sliding surface 23.

The second sliding surface 22 is formed continuously with the first sliding surface 23 on the upstream side U, the left side L, and the right side R of the above-described opening 21A.

Specifically, as illustrated in FIG. 5, the second sliding surface 22 includes a left-side plane 22L, a right-side plane 22R, and an upper-side plane 22U.

Here, as illustrated in FIG. 5, the left-side plane 22L is formed so as to rise from the first sliding surface 23 toward the inner side I on the left side L of the above-described opening 21A.

As illustrated in FIG. 5, the right-side plane 22R is formed so as to rise from the first sliding surface 23 toward the inner side I on the right side R of the opening 21A.

Further, as illustrated in FIG. 5, the upper-side plane 22U is formed so as to connect the left-side plane 22L and the right-side plane 22R.

According to the above-described configuration, the plurality of protrusions 22/92 can further reduce deterioration of the performance of conveying an article containing fat on the surface.

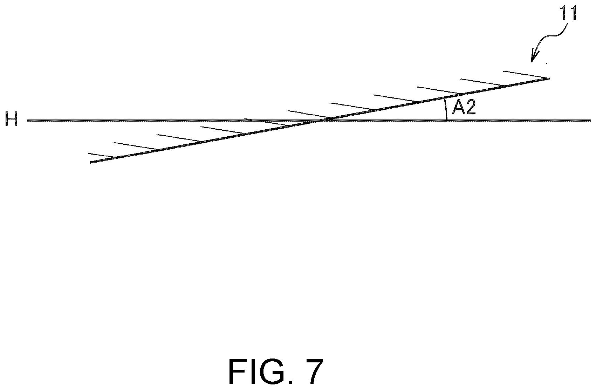

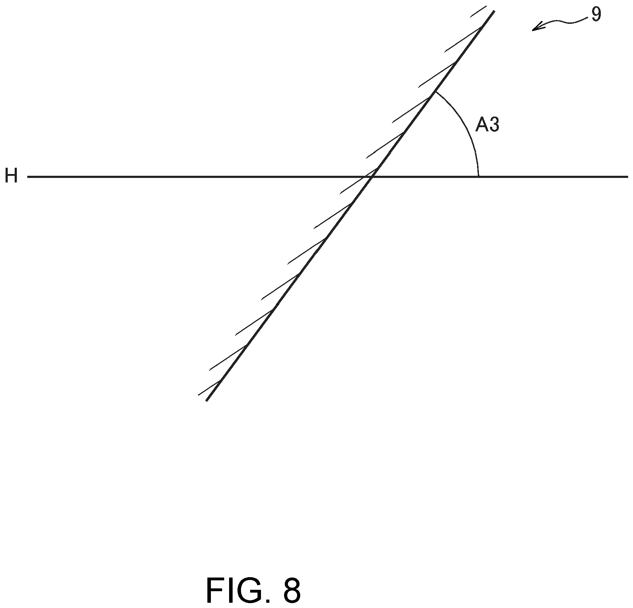

As illustrated in FIG. 7, when the trough 11 is viewed from the side, an angle A2 formed by the trough 11 and a horizontal direction H may be in a range of 9 to 12 degrees. As illustrated in FIG. 8, when the chute 9 is viewed from the side, an angle A3 formed by the chute 9 and the horizontal direction H may be in a range of 40 to 60 degrees. According to such configurations, the overall height of the combination weighing apparatus can be reduced while maintaining the conveyance performance as compared with the case in which the hydrophilic coating layer is not formed. This makes it easy to support heights of plants different for each customer.

According to the conveyance apparatus 1 according to the present embodiment, a decrease in the performance of conveying an article containing fat on the surface can be reduced. Compared to known coating layers having water repellency characteristics, when a hydrophilic coating layer is used, a thin water film can be formed on the conveyance surface. By the action of the water film formed in this manner, direct contact between at least fat on the surface of the article and the conveyance surface can be reduced, and adhesion between the articles can be reduced. Furthermore, since the water film is formed between the article and the conveyance surface to reduce direct contact between the article and the conveyance surface, the effect of the hydrophilic coating layer such as water repellency can be maintained for a long period of time as compared with other coating layers.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

### Reference Signs List

1 Conveyance apparatus
2 Coating layer
3 Conveyance unit
23, 31, 91 Conveyance front surface (First sliding surface)
9 Chute
10 Dispersion table
11 Trough
21A, 91A Opening
22L, 92L Left-side plane
22R, 92R Right-side plane
22U, 92U Upper-side plane
22, 92 Protrusion (Second sliding surface)
22E, 92E Downstream end
W Water droplet

## Claims

1. A conveyance apparatus comprising:
a conveyance unit configured to convey an article that is charged from an outside and contains fat on at least a surface of the article, wherein
a hydrophilic coating layer is formed on a conveyance front surface of the conveyance unit.

2. The conveyance apparatus according to claim 1, wherein
the conveyance front surface includes a plurality of protrusions.

3. The conveyance apparatus according to claim 2, wherein
an opening directed from the conveyance front surface to a back surface is formed at a downstream end of each of the plurality of protrusions.

4. The conveyance apparatus according to claim 2 or 3, wherein
the plurality of protrusions is formed by shutter processing.

5. The conveyance apparatus according to claim 2 or 3, wherein
the plurality of protrusions is formed by embossing.

6. The conveyance apparatus according to any of the preceding claims, wherein
the conveyance unit includes a trough, and
when the trough is viewed from a side, an angle formed by the trough and a horizontal direction is in a range of 9 to 12 degrees.

7. The conveyance apparatus according to any of the preceding claims, wherein
the conveyance unit includes a chute, and
when the chute is viewed from a side, an angle formed by the chute and a horizontal direction is in a range of 40 to 60 degrees.

8. The conveyance apparatus according to any of the preceding claims, wherein
a contact angle between the conveyance front surface on which the hydrophilic coating layer is formed and a water droplet formed on the conveyance front surface is 40 degrees or less.
